# EUROPÄISCHE PATENTSCHRIFT

(11) **EP 1 261 976 B1**
(45) Veröffentlichungstag und Bekanntmachung des Hinweises auf die Patenterteilung: **09.07.2003**
(21) Anmeldenummer: 01945059.2
(22) Anmeldetag: 27.04.2001
(51) Int. Cl.: H01C 1/032, H01C 7/04, H01C 7/22

(54) **TEMPERATURMESSFÜHLER UND VERFAHREN ZUR HERSTELLUNG DESSELBEN**
TEMPERATURE PROBE AND A METHOD FOR PRODUCING THE SAME
SONDE DE TEMPERATURE ET SON PROCEDE DE PRODUCTION

(30) Priorität: 28.04.2000 DE 10020932
(43) Veröffentlichungstag der Anmeldung: 04.12.2002
(73) Patentinhaber: Zitzmann, Heinrich, 91207 Lauf an der Pegnitz (DE); Bernitz, Georg, 90455 Nürnberg (DE)
(72) Erfinder: Zitzmann, Heinrich, 91207 Lauf an der Pegnitz (DE); Bernitz, Georg, 90455 Nürnberg (DE)
(74) Vertreter: Schoppe, Fritz, Dipl.-Ing.
(86) Internationale Anmeldenummer: EP0104789
(87) Internationale Veröffentlichungsnummer: WO01084562

(56) Entgegenhaltungen:
- DD-A- 288 456
- US-A- 4 007 063
- US-A- 4 019 168
- US-A- 4 323 875

## Beschreibung

Die vorliegende Erfindung bezieht sich auf einen Temperaturmeßfühler und auf ein Verfahren zur Herstellung desselben.

Temperaturmeßfühler werden seit vielen Jahren in der Dünnschichttechnik in unterschiedlichen Ausführungsformen hergestellt und für präzise Temperaturmeßaufgaben verwendet.

Ein bekannter Temperaturmeßfühler umfaßt ein Al₂O₃-Keramiksubstrat, auf dem ein Platinfilm mit einer Dicke von ca. 1µm aufgebracht ist. Dieser Platinfilm ist so strukturiert, um eine Widerstandsbahn mit einem Widerstandswert von etwa 100Ω zu haben. Zum Schutz der Platinwiderstandsbahn ist diese mit einer geeigneten Schutzschicht überzogen. An zwei Kontaktflächen sind Anschlußdrähte angeschweißt. Um eine mechanische Belastung der Anschlußdrähte zu gewährleisten, wird eine Fixierungsglasur aufgebracht, um die Anschlußdrähte zusätzlich mechanisch zu fixieren. Die Fixierungsglasur wird bei Temperaturen von ca. 800°C eingebrannt (die Glasur muß schmelzen), um eine Einsatztemperatur von bis zu 600°C zu gewähren (die Glasur darf sich bei diesem Temperaturbereich nicht erweichen).

Im Stand der Technik sind Widerstands-Temperaturfühler mit normierter Kennlinie bekannt, und die oben beschriebenen Platintemperaturfühler nach DIN EN 60751 sind am weitesten verbreitet. Insbesondere die oben beschriebene kostengünstige Dünnschichtausführung hat die anderen Metall-Fühlerarten, z.B. Temperaturfühler mit Widerstandsschichten aus Nickel, Nickellegierungen, Kupfer, Molybdän, Iridium, usw. weit in den Hintergrund gedrängt. Neben den technischen Vorteilen der Platin-Fühler, wie z.B. die hervorragende Langzeitstabilität, die sehr gute chemische Beständigkeit, die engen Toleranzen, der weite Temperaturbereich von bis zu 600°C bzw. sogar schon bis zu 1000°C, sind diese Dünnschichttypen inzwischen auch preislich günstiger als die Temperaturmeßfühler, die unedle Metalle verwenden.

Dennoch besteht weiterhin eine Nachfrage z.B. nach Nickel-Fühlern, da in einigen Anwendungen die früher ebenfalls normierte Nickelkennlinie (DIN 43760) "eingebürgert" ist, und trotz der heutigen elektronischen Möglichkeiten weiterhin Fühler mit der Nickelkennlinie erforderlich sind.

Die auf dem Markt erhältlichen Nickelfühler sind praktisch alle, ob drahtgewickelt oder in Dünnschicht ausgeführt, auf Temperaturen unter 250°C, meist sogar deutlich unter 200°C eingeschränkt.

Ein Nickel-Dünnschichttemperaturfühler ist üblicherweise ähnlich aufgebaut wie der oben beschriebene Platinfühler. Auf einem keramischen Trägersubstrat wird ein Metallfilm aus Nickel in Dünnschicht entweder durch Sputtern, Aufdampfen oder ähnliches aufgebracht. Dieser Metallfilm wird dann durch ein geeignetes Verfahren fotochemisch strukturiert, Widerstandsbahnen werden freigeätzt, und diese werden dann mittels Laserablation oder ähnlichen Verfahren auf den gewünschten Sollwiderstand abgeglichen.

Im Gegensatz zu Platinfühlern besteht die auf die Widerstandsschicht aufgebrachte Schutzschicht für den Metallfilm-Widerstand nicht aus Glas, sondern aus einer Schutzlackschicht, die beispielsweise aus Silicon oder ähnlichem besteht. Eine im Siebdruckverfahren aufgebrachte Glasabdeckung, wie sie bei Platintemperaturmeßfühlern üblich ist, bereitet im Fall von Nickel Probleme, da beim Einbrennvorgang das Nickel mit dem Glas chemisch reagieren würde, was sich durch eine Bläschenbildung im Glas (Porosität) und durch eine Veränderung der eingestellten Widerstandswerte äußern würde.

Ferner sind die Anschlußdrähte meist entweder gelötet oder geschweißt und mittels Epoxymasse an den Kontaktflächen fixiert. Eine Fixierung mittels Glasur, wie es bei Platinfühlern üblich ist, ist hier nicht möglich, da der herkömmlicherweise verwendete Abdeckschutzlack die hohe Einbrenntemperatur, welche sehr weit über 400°C liegt, nicht aushält.

Durch diese Gegebenheiten ist die obere Einsatztemperatur auf die oben genannten Werte von 200°C begrenzt.

Die DE 198 30 821 A1 beschreibt ein Temperatursensorelement mit einem isolierenden Substrat, einem Widerstandsmetallfilm, Anschlußelektroden und Anschlußzuleitungen. Die Anschlußzuleitungen sind mit den Anschlußelektroden verbunden und sind mittels einer Fixierung an dem Substrat mechanisch befestigt.

Die DE 25 389 66 A1 beschreibt ein Verfahren zur Herstellung elektrischer Temperaturfühler, bei dem auf ein dielektrisches Substrat eine elektrisch leitende Metalloxidschicht und auf diese eine weitere Metallschicht aufgebracht wird. Das Substrat umfaßt Anschlüsse und eine dielektrische Schutzschicht, über die die Anschlüsse hinausreichen.

In der Zeitschrift Measurement Techniques, Vol. 39, Nr. 7, 1996, Seiten 738 bis 742 wird die Auswirkung einer Oxidation von Platin auf die Charakteristika eines Standardplatinwiderstandsthermometers beschrieben.

Die DE 19932411 A1 beschreibt einen Temperatursensor, der einen Keramikträger aufweist, auf dem eine Widerstandsschicht aufgebracht ist. Die äußere Oberfläche der widerstandsschicht ist durch eine Diffusionsbarriere abgedeckt, die durch eine Oxidschicht gebildet ist.

Die DD 288 456 A5 beschreibt ein Verfahren zur Herstellung eines edelmetallfreien Dünnschichttemperatursensors, bei dem wird zunächst eine Cr-Ni-Schicht auf ein oxidiertes Siliziumsubstrat abgeschieden und anschließend in einer O₂-Atmosphäre getempert wird, um den Temperaturkoeffizienten der Widerstandsschicht auf einen erwünschten Wert einzustellen. Dies führt gleichzeitig zu einer Oxidation der Cr-Ni-Schicht. Auf die so gebildete Cr-Ni-Sensorschicht wird in einem weiteren Sputterprozeß eine SiO₂-Abdeckschicht aufgebracht.

Die US-A-4,019,168 beschreibt einen Dünnfilmwiderstand mit einem Substrat, auf dem ein Ni-Cr-Dünnfilm abgeschieden ist. Auf diesem Dünnfilm ist wiederum eine Tantalschicht abgeschieden, die durch eine Oxidation passiviert wird, so daß der Dünnfilm durch ein Tantaloxid geschützt ist.

Die US-A-4,007,063 beschreibt einen Dünnfilmwiderstand und ein Verfahren zur Wärmebehandlung desselben. Dieser Widerstand umfaßt einen Metallfilm, der oxidiert wird, wobei eine Oxidation gewählt werden kann, bei der die Konstellation von Sauerstoff ausreichend ist, um ein Schutzoxid zu bilden, welches den Metallfilm bedeckt.

Die US-A-4,323,875 beschreibt einen Nickel-Temperaturmeßfühler, der einer Wärmebehandlung unterzogen wird.

Ausgehend von diesem Stand der Technik liegt der vorliegenden Erfindung die Aufgabe zugrunde, ein Verfahren zur Herstellung eines Temperaturmeßfühlers und einen Temperaturmeßfühler zu bilden, dessen Widerstandsschicht durch unedle Metalle gebildet ist, und der einen Einsatzbereich über einen weiten Bereich von Temperaturen aufweist.

Diese Aufgabe wird durch ein Verfahren gemäß Anspruch 1 sowie durch einen Temperaturmeßfühler gemäß Anspruch 4 gelöst.

Bei einem bevorzugten Ausführungsbeispiel der vorliegenden Erfindung besteht die Widerstandsschicht aus Nickel oder einer Nickellegierung.

Bevorzugterweise handelt es sich bei der auf die Widerstandsschicht aufgebrachte Schutzschicht um eine Glasurschicht.

Ein Vorteil der vorliegenden Erfindung besteht darin, daß die erfindungsgemäß Anordnung und die Verwendung der Glasabdeckung des unedlen Films, wie z.B. des Nickelfilms sowie die Glasfixierung der Anschlußdrähte auch im herkömmlichen Einsatzbereich von 200°C wesentliche qualitative Vorteile bieten, z. B. einen besseren Schutz gegen Feuchte durch die Glasurschicht bzw. eine bessere Temperaturwechselbeständigkeit der Glasfixierung aufgrund des angepaßten thermischen Ausdehnungskoeffizienten des Glases mit der Keramik.

Ein weiterer Vorteil besteht darin, daß durch die erfindungsgemäße Anordnung der Einsatzbereich der Temperaturmeßfühleranordnung, z.B. für Nickelfühler, nach oben bis über 300°C ausgedehnt werden kann.

Der vorliegenden Erfindung liegt die Erkenntnis zugrunde, daß die zum Schutz der Widerstandsschicht aufgebrachte Glasurschicht mit der Oxidschicht beim Schmelzen nicht reagiert, so daß die im Stand der Technik auftretenden Probleme sicher vermieden werden. Hierdurch wird vermieden, daß sich an der Schnittstelle zwischen der Widerstandsschicht und der Glasur Inhomogenitäten, z.B. in Form von Bläschen, bilden, wodurch sich trotz der kostengünstigen Materialien eine sichere Aufbringung der Schutzschicht einstellt.

Bevorzugte Ausführungsbeispiele der vorliegenden Anmeldung werden nachfolgend unter Bezugnahme auf die beiliegenden Zeichnungen näher erläutert. Es zeigen:
- Fig. 1: eine Draufsichtdarstellung einer erfindungsgemäßen Temperaturmeßfühleranordnung; und
- Fig. 2: eine Querschnittdarstellung der in Fig. 1 gezeigten Anordnung.

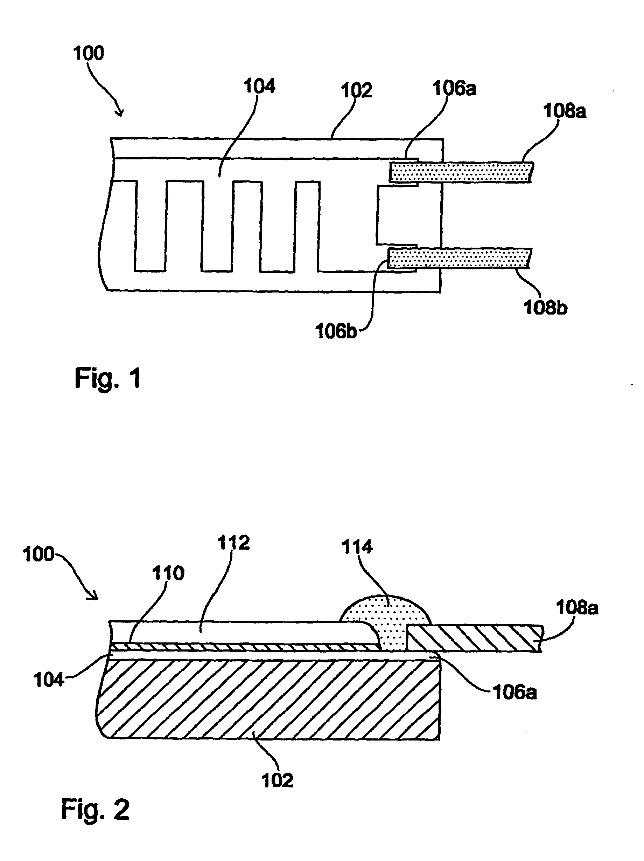

Fig. 1 zeigt einen Temperaturmeßfühler 100, der ein Substrat 102 umfaßt, auf dem eine strukturierte Widerstandsschicht 104 angeordnet ist. Die Widerstandsschicht 104 umfaßt ferner einen ersten Anschlußbereich 106a und einen zweiten Anschlußbereich 106b. Die Anschlußdrähte 108a und 108b sind mit den Anschlußbereichen bzw. Kontaktstellen 106a, 106b verbunden. Fig. 2 zeigt eine Querschnittdarstellung des Temperaturmeßfühlers 100 aus Fig. 1. Gleiche Elemente sind mit den gleichen Bezugszeichen versehen. Wie zu erkennen ist, ist auf der Widerstandsschicht 104 eine Oxidschicht 110 angeordnet, die sich teilweise über die Widerstandsschicht erstreckt. Der Bereich, in dem eine Befestigung des Anschlußdrahtes 108a erfolgt, ist nicht mit der Oxidschicht bedeckt. Die Widerstandsschicht 104 wird durch eine Glasurschicht 112 bedeckt. Der Anschlußdraht 108a wird zusätzlich zu seiner Befestigung an der Kontaktstelle 106a mit einer Fixierungsglasur 114 mechanisch an dem Element befestigt.

Gemäß der vorliegenden Erfindung muß die blankliegende Widerstandsschicht 104, die beispielsweise ein Nickelfilm ist, geschützt werden, so daß der Nickelfilm mit der aufzubringenden Glasurschicht 112 während des Einbrennvorganges chemisch nicht reagiert. Vor dem Einbrennvorgang wird die Glasurschicht 112 z.B. mittels Siebdruck aufgebracht. Der gerade erwähnte Schutz wird dadurch erreicht, daß die Oberfläche des Nickelfilms oxidiert wird, d.h. der Nickelfilm erhält an der Oberfläche eine dichte Nickeloxidschicht (NiO). Dies kann z.B. dadurch erreicht werden, daß die auf dem Substrat 102 aufgebrachte Widerstandsschicht 104 in sauerstoffhaltiger Atmosphäre für eine bestimmte Zeitdauer bei einer höheren Temperatur, z.B. 800°C ausgelagert wird. Durch die Oxidation wird die ursprüngliche Dicke des elektrisch leitfähigen Nickelfilms verringert, da die aufbauende NiO-Schicht, die eine Dicke von ca. 0,1µm aufweist, elektrisch ein Isolator ist.

Der Vorteil der vorliegenden Erfindung besteht u.a. darin, daß sich durch diese Voroxidation die eingestellten Widerstandswerte in den nachfolgenden Einbrennprozessen der Glasurschicht 112 für den Nickelfilm 104 bzw. der Fixierungsglasur 114 der Anschlußdrähte 108a, 108b, die bei ca. 800°C ablaufen, nur noch unwesentlich verändern. Insbesondere sind die so geschützten Temperaturmeßfühler 100 bis zu relativ hohen Einsatztemperaturen von etwa um 300°C sehr stabil.

Anstelle der oben beschriebenen Oxidation in sauerstoffhaltiger Atmosphäre und bei höheren Temperaturen kann diese auch auf anderem Wege erfolgen, z.B. auf elektrochemischem Wege. In jedem Fall kann die Dicke der Oxidschicht 110 durch die physikalischen Parameter Temperatur, Zeit, etc. beliebig gesteuert werden.

Neben den oben beschriebenen reinen Nickelfilmen kann das erfindungsgemäße Verfahren auch auf Nickellegierungen angewendet werden, z.B. auf Nickeleisen (Ni99,4Fe oder NiFe30). Die gerade genannten Legierungsverhältnisse sind nicht auf feste Zusammensetzungen beschränkt. Bezüglich der Anschlußdrähte können verschiedene Drahtmaterialien, z.B. Nickel, Silber, etc. verwendet werden. Es können auch unbedrahtete Fühlerelemente, z.B. SMD-Typen auf diese Weise, d.h. mit Glasabdeckung des Films, hergestellt werden.

Die Fixierungsglasur 114 kann in einem Temperaturbereich zwischen 500°C und 1000°C eingebrannt werden. Der Nickelfilm kann in einem Temperaturbereich zwischen 500°C und 900°C während einer Zeitdauer von wenigen Minuten bis ca. 1 Stunde oxidiert werden.

Zum Befestigen der Anschlußdrähte an den Kontaktstellen 106a und 106b wird nach dem Oxidieren der Widerstandsschicht die Oxidschicht an diesen Bereichen entfernt und die Anschlußdrähte 108a und 108b werden befestigt und ggf. mit einer Fixierungsglasur 114 fixiert.

## Patentansprüche

1. Verfahren zur Herstellung eines Temperaturmeßfühlers (100) mit folgenden Schritten:
(a) Bilden einer strukturierten Widerstandsschicht (104) aus einem unedlen Metall auf einer Oberfläche eines Substrats (102); und
(b) Oxidieren der gebildeten Widerstandsschicht (104);
**gekennzeichnet durch** folgende Schritte
(c) Aufbringen einer Glasurschicht (112), die die oxidierte Oberfläche der Widerstandsschicht (104) zumindest teilweise bedeckt; und
(d) Einbrennen der Glasurschicht (112).

2. Verfahren nach Anspruch 1, bei dem die Widerstandsschicht (104) zumindest eine Kontaktstelle (106a, 106b) umfaßt, wobei die Glasurschicht (112) derart aufgebracht ist, daß die Kontaktstelle (106a, 106b) freiliegt, mit folgenden Schritten:
(e) Entfernen der Oxidschicht (110) von der Kontaktstelle (106a, 106b); und
(f) Befestigen eines Anschlußdrahtes (108a, 108b) an der Kontaktstelle (106a, 106b).

3. Verfahren nach Anspruch 2 mit folgendem Schritt:
(g) Fixieren des Anschlußdrahtes (108a, 108b) mittels einer Fixierungsglasur (114).

4. Temperaturmeßfühler, mit
einem Substrat (102),
einer Widerstandsschicht (104) aus einem unedlen Metall, die auf dem Substrat (102) gebildet ist, wobei die Widerstandsschicht (104) an der dem Substrat (102) abgewandten Oberfläche (110) oxidiert ist, und
einer eingebrannten Glasurschicht (112), die die oxidierte Oberfläche der Widerstandsschicht (104) zumindest teilweise bedeckt.

5. Temperaturmeßfühler nach Anspruch 4, mit einem Anschlußdraht (108a, 108b), der mit einer Kontaktstelle (106a, 106b) verbunden ist und mit einer Fixierungsglasur *(114)* befestigt ist.

6. Temperaturmeßfühler nach Anspruch 4 oder 5, bei dem das unedle Metall Nickel oder eine Nickellegierung ist.

## Claims

1. Method of manufacturing a temperature measurement sensing device (100), comprising the following steps:
(a) forming a structured resistor layer (104) made of a non-noble metal on a surface of a substrate (102); and
(b) oxidizing the resistor layer (104) formed;
**characterized by** the following steps:
(c) applying a glaze layer (112) at least partially covering the oxidized surface of the resistor layer (104); and
(d) burning in the glaze layer (112).

2. Method according to claim 1, wherein the resistor layer (104) includes at least one contact pad (106a, 106b), the glaze layer (112) being applied in such a way that the contact pad (106a, 106b) is exposed, the method comprising the following steps:
(e) removing the oxide layer (110) from the contact pad (106a, 106b); and
(f) securing a connecting wire (108a, 108b) at the contact pad (106a, 106b).

3. Method according to claim 2, comprising the following step:
(g) fixing the connecting wire (108a, 108b) by means of a fixing glaze (114).

4. Temperature measurement sensing device comprising:
a substrate (102);
a resistor layer (104) made of a non-noble metal and formed on the substrate (102), the resistor layer (104) being oxidized at the surface (110) facing away from the substrate (102); and
a burnt-in glaze layer (112) at least partially covering the oxidized surface of the resistor layer (104).

5. Temperature measurement sensing device according to claim 4, having a connecting wire (108a, 108b) connected to a contact pad (106a, 106b) and secured by a fixing glaze (114).

6. Temperature measurement sensing device according to claim 4 or 5, wherein the non-noble metal is nickel or a nickel alloy.

## Revendications

1. Procédé de fabrication d'une sonde de mesure de température (100) comportant les étapes suivantes :
(a) formation d'une couche résistive (104) structurée en un métal non noble, sur une surface d'un substrat (102); et
(b) oxydation de la couche résistive (104) formée;
**caractérisé par** les étapes suivantes :
(c) application d'une couche d'émail (112) couvrant au moins partiellement la surface oxydée de la couche résistive (104) ; et
(d) cuisson ce la couche d'émail (112).

2. Procédé selon la revendication 1, dans lequel la couche résistive (104) comprend au moins un point de contact (106a, 106b), la couche d'émail (112) étant appliquée de manière que le point de contact (106a, 106b) soit laissé libre, avec les étapes suivantes :
(e) enlèvement de la couche d'oxyde (110) du point de contact (106a, 106b); et
(f) fixation d'un fil de raccordement (108a, 108b) au point de contact (106a, 106b).

3. Procédé selon la revendication 2, comportant l'étape suivante :
(g) fixation du fil de raccordement (108a, 108b) à l'aide d'un émail de fixation (114).

4. Sonde de mesure de température comportant un substrat (102), une couche résistive (104), formée d'un métal non noble, formée sur le substrat (102), la couche résistive (104) étant oxydée sur la surface (110), opposée au substrat (102), et une couche d'émail (112) cuite, couvrant au moins partiellement la surface oxydée de la couche résistive (104).

5. Sonde de mesure de température salon la revendication 4, comportant un fil de raccordement (108a, 108b), relié à un point de contact (106a, 106b) et fixé à un émail de fixation (114).

6. Sonde de mesure de température selon la revendication 4 ou 5, pour laquelle le métal non noble est du nickel ou bien un alliage de nickel.
